# EUROPEAN PATENT APPLICATION

(11) **EP 4 654 713 A1**
(43) Date of publication of application: **26.11.2025**
(21) Application number: 23916809.9
(22) Date of filing: 19.01.2023
(51) Int. Cl.: H04W 72/12

(54) **SCHEDULING REQUEST TRANSMISSION METHODS AND APPARATUSES, COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2023/073251
(87) International publication number: WO 2024/152330

(57) **Abstract**

The embodiments of the present disclosure provide scheduling request transmission methods and apparatuses, a communication device, and a storage medium. A scheduling request transmission method executed by a user equipment (UE) comprises: a UE sending to a network device a scheduling request (SR) triggered by a buffer status report (BSR), wherein the BSR comprises a first BSR triggered according to delay information of data to be transmitted.

## Description

### TECHNICAL FIELD

The present disclosure relates to, but is not limited to, a field of wireless communication technology, and more particularly to a scheduling request transmission method and an apparatus, a communication device, and a storage medium.

### BACKGROUND

In mobile media services, cloud AR (augmented reality) / VR (virtual reality), and other XR (Extended Reality) services, multiple Quality of Service (QoS) flows are usually included, and the traffic thereof is very large, and is expected to contribute increasingly high traffic to 5G (5th generation) mobile communication technology networks.

In related art, usually, a Buffer Status Report (BSR), also referred to as a buffer state report, may be sent only when data of a higher-priority logical channel arrives; in this case, some data flows belong to a logical channel with a low priority levels, but if these data flows are not scheduled for a long time, it may cause deterioration in the user experience of the User Equipment (UE) in XR applications.

### SUMMARY

Embodiments of the present disclosure provide a scheduling request transmission method and an apparatus, a communication device, and a storage medium.

A first aspect of embodiments of the present disclosure provides a scheduling request transmission method, performed by a user equipment (UE), the method includes:
sending, by the UE, a scheduling request (SR) triggered by a buffer status report (BSR) to a network device; where the BSR includes: a first BSR triggered according to delay information of to-be-transmitted data.

A second aspect of embodiments of the present disclosure provides a scheduling request transmission method, performed by a network device, and the method includes:
receiving, by the network device, a scheduling request (SR) triggered by a buffer status report (BSR) sent by a user equipment (UE), where the BSR includes a first BSR triggered according to delay information of to-be-transmitted data.

A third aspect of embodiments of the present disclosure provides a scheduling request transmission apparatus, applied to a user equipment (UE), the apparatus includes:
a sending module, configured to send, by the UE, a scheduling request (SR) triggered by a buffer status report (BSR) to a network device, where the BSR includes a first BSR triggered according to delay information of to-be-transmitted data.

A fourth aspect of embodiments of the present disclosure provides a scheduling request transmission apparatus, applied to a network device, the apparatus includes:
a receiving module, configured to receive a scheduling request (SR) triggered by a buffer status report (BSR) sent by a user equipment (UE), where the BSR includes a first BSR triggered according to delay information of to-be-transmitted data.

A fifth aspect of the embodiments of the present disclosure provides a communication system, the communication system includes:
a User Equipment (UE), configured to perform the scheduling request transmission method described in the first aspect;
a network device, configured to perform the scheduling request transmission method described in the second aspect.

A sixth aspect of the embodiments of the present disclosure provides a communication device, including a processor, a memory, and an executable program stored in the memory and executable by the processor, where the processor is configured to execute the scheduling request transmission method as described in the first aspect or the second aspect when executing the executable program.

A seventh aspect of the embodiments of the present disclosure provides a computer-readable storage medium, where the computer-readable storage medium stores an executable program; and the executable program, when executed by a processor, is configured to implement the scheduling request transmission method as described in the first aspect or the second aspect.

The technical solution provided by the embodiments of the present disclosure is that the UE sends an SR triggered by a BSR to the network device, where the BSR includes a first BSR triggered according to the delay information of to-be-transmitted data. Since the first BSR is triggered according to the delay information of the to-be-transmitted data, the UE sends the SR triggered by the first BSR to the network device, such that the urgent scheduling requirements of service data may be satisfied, which is beneficial for improving the user experience of the UE in applications such as XR.

It should be understood that the above general description and the following detailed description are merely exemplary and explanatory, and are not intended to limit the embodiments of the present disclosure.

### BRIEF DESCRIPTION OF THE DRAWINGS

The drawings herein are incorporated into and constitute a part of the present specification, and illustrate embodiments in accordance with the present disclosure, and together with the description, serve to explain principles of the embodiments of the present disclosure.
FIG. 1 is a schematic structural diagram of a wireless communication system according to an exemplary embodiment;
FIG. 2 is a schematic flow diagram of a scheduling request transmission method according to an exemplary embodiment;
FIG. 3 is a schematic flow diagram of a scheduling request transmission method according to an exemplary embodiment;
FIG. 4 is a schematic flow diagram of a scheduling request transmission method according to an exemplary embodiment;
FIG. 5 is a schematic flow diagram of a scheduling request transmission method according to an exemplary embodiment;
FIG. 6 is a schematic flow diagram of a scheduling request transmission method according to an exemplary embodiment;
FIG. 7 is a schematic flow diagram of a scheduling request transmission method according to an exemplary embodiment;
FIG. 8 is a schematic flow diagram of a scheduling request transmission method according to an exemplary embodiment;
FIG. 9 is a schematic flow diagram of a scheduling request transmission method according to an exemplary embodiment;
FIG. 10 is a schematic structural diagram of a scheduling request transmission apparatus according to an exemplary embodiment;
FIG. 11 is a schematic structural diagram of a scheduling request transmission apparatus according to an exemplary embodiment;
FIG. 12 is a schematic structural diagram of a UE according to an exemplary embodiment;
FIG. 13 is a schematic structural diagram of a communication device according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of the present disclosure. Rather, they are merely examples of apparatus and methods consistent with some aspects of embodiments of the present disclosure.

The term used in the embodiments of the present disclosure is for the purpose of describing specific embodiments only and is not intended to limit the embodiments of the present disclosure. As used in the present disclosure, singular forms "a", "an", and "the" are intended to include plural forms as well, unless the context clearly dictates otherwise. It will also be understood that the term "and/or" as used herein refers to and includes any and all possible combinations of one or more of the associated listed items.

It should be understood that although the terms "first", "second", "third", etc. may be used to describe various information in the embodiments of the present disclosure, the information should not be limited to these terms. These terms are only used to distinguish information of the same type from each other. For example, without departing from the scope of the embodiments of the present disclosure, the first information may also be referred to as second information, and similarly, the second information may also be referred to as first information. Depending on the context, the word "if" as used herein may be interpreted as "when" or "in a case that" or "in response to determining that".

It may be understood that the description of various embodiments in the present disclosure focuses on the differences between the various embodiments, and the similarities or similarities between the embodiments may be referred to each other. For the sake of brevity, they will not be described again one by one.

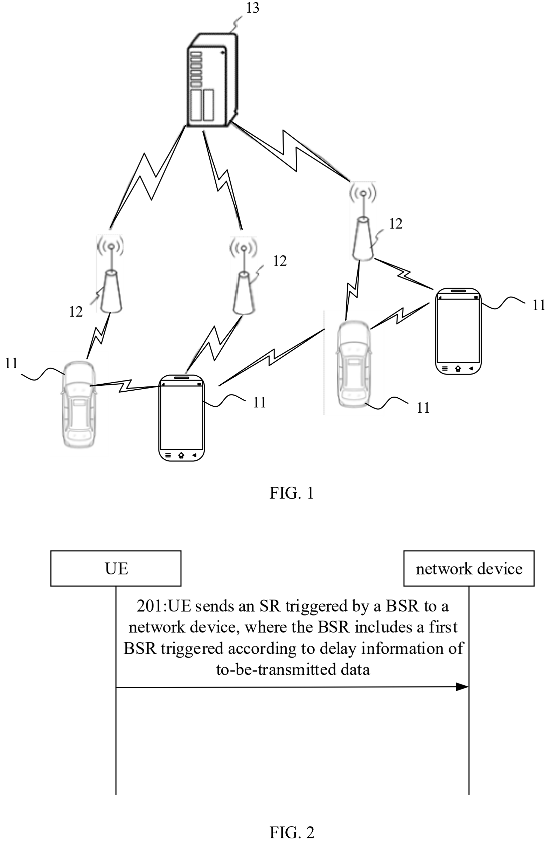

Please refer to FIG. 1, which shows a schematic structural diagram of a wireless communication system provided by an embodiment of the present disclosure. As shown in FIG. 1, the wireless communication system is a communication system based on cellular mobile communication technology. The wireless communication system may include several terminals 11 and several network devices 12.

The terminal 11 may be a device that provides voice and/or data connectivity to a user. The terminal 11 may communicate with one or more core networks via a radio access network (RAN). The terminal 11 may be an Internet of Things UE, such as a sensor device, a mobile phone (or a "cellular" phone) and a computer with the Internet of Things UE, for example, which may be a fixed, portable, pocket-sized, handheld, computer-built-in or vehicle-mounted device. For example, a station (STA), subscriber unit, subscriber station, mobile station, mobile, remote station, access point, remote UE (remote terminal), access UE (access terminal), user device (user terminal), user agent, user device, or user equipment (UE). Alternatively, the terminal 11 may be a device of an unmanned aerial vehicle. Alternatively, the terminal 11 may also be a vehicle-mounted device, for example, it may be an on-board computer with a wireless communication function, or a wireless communication device connected to an external on-board computer. Alternatively, the terminal 11 may also be a roadside device, for example, it may be a streetlight, a signal light or other roadside device with a wireless communication function.

The network device 12 may be a device used in a wireless communication system for communication with a terminal. The wireless communication system may be a 4th generation mobile communication system, also known as a long term evolution (LTE) system; or the wireless communication system may also be a 5G system, also referred to as a new radio (NR) system or a 5G NR system. Alternatively, the wireless communication system may also be a next-generation system of the 5G system. An access network in the 5G system may be referred to as an NG-RAN (New Generation-Radio Access Network).

The network device 12 may be referred to as a radio access network device, for example, including an access network device, such as a base station (for example, an access point), which may refer to a device in the access network that communicates with terminals over one or more cells via an air interface.

The network device 12 may be an evolved access device (eNB) used in the 4G system. Alternatively, the network device 12 may also be an access device (gNB) using a centralized distributed architecture in the 5G system. When the network device 12 adopts the centralized distributed architecture, it usually includes a central unit (CU) and at least two distributed units (DUs). The centralized unit is provided with a protocol stack including a packet data convergence protocol (PDCP) layer, a radio link control protocol (RLC) layer, and a media access control (MAC) layer. The distributed unit is provided with a physical (PHY) layer protocol stack. The specific implementation of the network device 12 is not limited in the embodiments of the present disclosure.

A wireless connection between the network device 12 and the terminal 11 may be established through a wireless air interface. In different implementations, the wireless air interface is a wireless air interface based on the 4G standard; or the wireless air interface is a wireless air interface based on the 5G standard, for example, the wireless air interface is a new air interface; alternatively, the wireless air interface may also be a wireless air interface based on a next generation mobile communication network technology standard beyond the 5G.

In one embodiment, an E2E (End to End) or D2D (device to device) connection may also be established between the terminals 11, for example, V2V (vehicle to vehicle) communication, V2I (vehicle to Infrastructure) communication, V2P (vehicle to pedestrian) communication, and other scenes in the vehicle to everything (V2X) communication.

When a connection is established between terminals, if one or more terminals function as a network device in the communication between terminals, the one or more terminals may also be regarded as the above-mentioned network device 12, and the other terminals may be regarded as the above-mentioned terminal 11. For example, in the vehicle to everything scene, the vehicle-mounted terminal A reports its capability information (such as antenna capability information) to another vehicle-mounted terminal B, and the vehicle-mounted terminal B controls the communication between the vehicle-mounted terminal A and the vehicle-mounted terminal B based on its capability information. That is, the vehicle-mounted terminal B acts as a leading vehicle in the vehicle network. At this time, the vehicle-mounted terminal B may be regarded as the above-mentioned network device 12, and the vehicle-mounted terminal A may be regarded as the above-mentioned terminal 11.

In one embodiment, the above wireless communication system may also include a network management device 13. The several network devices 12 are connected to the network management device 13, respectively. The network management device 13 may be a core network device in the wireless communication system. For example, the network management device 13 may be a mobility management entity (MME) in an evolved packet core (EPC). Alternatively, the network management device may also be other core network devices, such as a serving gateway (SGW), a public data network gateway (PGW), a policy and charging rules function (PCRF), or a home subscriber server (HSS), etc. The implementation form of the network management device 13 is not limited in the embodiments of the present disclosure.

In order to facilitate the understanding of those skilled in the art, a plurality of embodiments are enumerated in the embodiments of the present disclosure to clearly describe the technical solutions of the present disclosure. Of course, it will be understood by those skilled in the art that the plurality of embodiments provided in the present disclosure may be executed individually, or may be executed in combination with other embodiments in the present disclosure, or may be executed individually or in combination with some methods in related art. The embodiments of the present disclosure are not limited thereto.

The XR services usually include multiple QoS (Quality of Service) flows, and the service volume is extremely large. During transmission, the XR service flows are required to meet a certain delay requirement, especially since some data flows need to arrive on the server simultaneously for decoding. A delay in any one of the data flows may cause joint decoding failure of the multiple data flows. However, the network scheduling is dynamic. Therefore, in some cases, even if some data flows belong to a logical channel with a lower priority level, if certain data packets have not been scheduled for a long time, a BSR needs to be sent to notify the network as soon as possible. According to the relevant mechanism, the BSR may be sent only when data of a logical channel with a high priority level arrives, and in such case, urgent scheduling demand cannot be satisfied. Therefore, it is necessary to optimize for urgent scheduling scenarios in services such as XR services and cloud gaming and the like.

Before the method provided in the present disclosure is described in detail, some concepts involved in the present disclosure are briefly introduced.

When a terminal device performs uplink data transmission, the terminal device must first request scheduling resources from a network device. The UE may request the resource scheduling, for example, by sending a Scheduling Request (SR) or a Buffer Status Report (BSR).

When the terminal device does not have a valid Uplink Grant (UL grant), an SR is used to request UL-SCH (Uplink Shared Channel) resources for transmission. If no SR is configured for the terminal device, the terminal device initiates a random access procedure to be scheduled in the uplink.

Compared with the SR, BSR carries more detailed information. BSR indicates the buffer size (i.e., data amount) for each LCG (Logical Channel Group). BSR is a Medium Access Control (MAC) Control Element (CE) from the terminal device to the network, which carries information on how much data in the terminal device is to be sent on the uplink. The network may then allocate a certain amount of uplink grants.

If any one of the following events occur in an activated cell group, a BSR will be triggered:
Uplink (UL) data for a Logical Channel (LCH) (belonging to an LCG) becomes available to the MAC (Medium Access Control) entity; and either
- the UL data belongs to a logical channel whose priority is higher than the priority of any logical channel with available UL data which belong to any LCG; or
- none of logical channels belonging to the LCG contains any available UL data.

In such case, the triggered BSR is referred to as a "Regular BSR";
- UL resources are allocated and the number of padding bits is greater than or equal to the size of the Buffer Status Report MAC CE plus its Subheader; in such case, the triggered BSR is referred to as a "Padding BSR";
- the BSR retransmission timer (RetxBSR-Timer) expires and at least one logical channel belonging to the LCG contains UL data; in such case, the triggered BSR is referred to as a "Regular BSR";
- the Periodic BSR-timer expires; in such case, the triggered BSR is referred to as a "Periodic BSR".

That is, the regular BSR (new data arrival or higher-priority logical channel arrival), the periodic BSR, and (the padding BSR).

When the periodic BSR expires, the BSR is sent periodically. If uplink authorization is not granted for a long time, retransmission may be performed.

When sending the BSR, if there is no uplink grant, an SR request needs to be sent to the network first.
1> if the Buffer Status reporting procedure determines that at least one BSR has been triggered and not cancelled:
   2> if UL-SCH (Uplink Shared Channel) resources are available for a new transmission and the UL-SCH resources may accommodate the BSR MAC CE plus its subheader as a result of logical channel prioritization:
      3> instruct the Multiplexing and Assembly procedure to generate the BSR MAC CE(s)
      3> unless the generated BSRs are all Long Truncated BSRs, or Short Truncated BSRs, or Extended Long Truncated BSRs, or Extended Short Truncated BSRs, start or restart the periodic BSR-timer;
      3> start or restart the BSR retransmission timer (retxBSR-Timer).
   2> if a Regular BSR has been triggered and logicalChannelSR-DelayTimer is not running:
      3> if there is no UL-SCH resource available for a new transmission; or
      3> if the MAC entity is configured with configured uplink grant(s) and the Regular BSR was triggered for a logical channel for which logicalChannelSR-Mask is set to false; or
      3> if the UL-SCH resources available for new transmission do not meet the LCP (Logical Channel Prioritization) mapping restrictions configured for the logical channel that triggered the BSR;
         4> trigger a Scheduling Request.

FIG. 2 is a flow diagram illustrating a scheduling request transmission method according to an exemplary embodiment. As shown in FIG. 2, the scheduling request transmission method is performed by a first network function and includes the following steps:

201: a UE sends an SR triggered by a BSR to a network device, where the BSR includes a first BSR triggered according to delay information of to-be-transmitted data.

In the present disclosure, the UE may include but is not limited to: a mobile phone, an unmanned aerial vehicle, a vehicle, a smart home appliance, or any Internet of Things (IoT) device. It should be understood that the UE in the present disclosure may also be referred to as a terminal or terminal device.

In some examples, the network device may be a functional entity which controls or schedules the UE, such as a base station, and the base station may be an LTE eNB, or an NR gNB, or an ng-eNB, or an en-gNB, etc.

The data may be transmitted between the UE and the network device (e.g., the base station), and the data may be in the form of data packets.

For example, in Extended Reality (XR) applications, the data packets may have an associated Packet Delay Budget (PDB), which may correspond to a maximum allowable waiting time associated with the data packet. The UE processes (e.g., transmits) the application data in the data packet within the packet delay budget.

In some examples, the to-be-transmitted data may be to-be-transmitted data of a logical channel belonging to a logical channel group.

In other examples, the to-be-transmitted data may include to-be-transmitted data of each logical channel belonging to a logical channel group.

The UE may, for a triggered BSR, trigger an SR in the case that there is no uplink grant for the BSR or no uplink resource for transmitting the BSR, to request uplink resources for transmitting the BSR from the network device.

In some examples, the delay information of the to-be-transmitted data may include Delay Budget Information (DBI).

In some examples, the delay information may include at least one of: Remaining Delay Budget and Packet Delay Budget, and/or a ratio between the Remaining Delay Budget and the Packet Delay Budget.

In some examples, the Remaining Delay Budget may be a delay budget margin.

In some examples, the UE may determine the Remaining Delay Budget of the to-be-transmitted data according to the Packet Delay Budget of the to-be-transmitted data and the waiting time of the to-be-transmitted data in a buffer of the UE.

As an example, the Remaining Delay Budget of the to-be-transmitted data may be an amount of remaining time between the Packet Delay Budget of the to-be-transmitted data and the waiting time of the to-be-transmitted data in the buffer of the UE.

In some examples, the UE may determine whether to trigger a logical channel corresponding to the first BSR according to the delay information of the to-be-transmitted data.

Exemplarily, the UE may, according to the indication information from the network device, determine a logical channel or logical channel group corresponding to the first BSR trigged according to the delay information of the to-be-transmitted data, and determine whether to trigger the first BSR according to a preset threshold and the delay information of the to-be-transmitted data in the determined logical channel or a logical channel within the logical channel group.

In the present disclosure, for to-be-transmitted data (e.g., a data packet) of a certain logical channel, if the first BSR is triggered according to the delay information belonging to the to-be-transmitted data, the to-be-transmitted data may be referred to as: to-be-transmitted data belonging to the logical channel that triggers the first BSR; and the logical channel may be referred to as: the logical channel that triggers the first BSR.

In some examples, the first BSR may be triggered by the UE according to a preset threshold and the delay information of the to-be-transmitted data of a certain logical channel.

As an example, the first BSR may be triggered by the UE when the Remaining Delay Budget of the to-be-transmitted data of a certain logical channel is less than or equal to a first threshold.

As another example, the first BSR may be triggered by the UE when a ratio of the Remaining Delay Budget of the to-be-transmitted data of a logical channel to a Packet Delay Budget is less than or equal to a second threshold.

In some other examples, the first BSR may be triggered by the UE according to a preset threshold and the delay information of the to-be-transmitted data of all logical channels belonging to the same logical channel group.

As an example, the first BSR may be triggered by the UE when an average value of the Remaining Delay Budgets of the to-be-transmitted data of all logical channels within the same logical channel group is less than or equal to a preset first average threshold.

As another example, the first BSR may be triggered by the UE when an average value of the ratios of the Remaining Delay Budget to the Packet Delay Budget of the to-be-transmitted data of all logical channels within the same logical channel group is less than or equal to a preset second average threshold.

In some examples, in the step 201 above, the UE may send an SR triggered by the first BSR to the network device using a first SR configuration.

Here, Physical Uplink Control Channel (PUCCH) resource indicated by the first SR configuration is used by the UE to send the SR triggered by the first BSR.

In some examples, the first SR configuration may be any SR configuration pre-configured for the UE by the network device.

Exemplarily, the first SR configuration may be an SR configuration corresponding to the triggering condition of the first BSR, or an SR configuration corresponding to a logical channel or a logical channel group.

For example, the SR configuration may be configured by the network device for a logical channel, and different logical channels belonging to one logical channel group correspond to different SR configurations.

As another example, the SR configuration may be configured by the network device for a logical channel group, and different logical channel groups correspond to different SR configurations.

In some examples, the method may further include:
receiving an uplink grant sent by a network device, and sending the first BSR to the network device when an uplink resource indicated by the uplink grant is able to be used by the UE to transmit the first BSR.

Exemplarily, the uplink grant for the first BSR may indicate or carry resource allocation information for reporting the first BSR by the UE, and the UE may report the first BSR to the network device according to the resource allocation information.

In some examples, the first BSR sent by the UE to the network device may include: data amount information related to delay information (e.g., Remaining Delay Budget) of the to-be-transmitted data used for triggering the first BSR.

In some examples, the first BSR sent by the UE may carry the delay information (e.g., Remaining Delay Budget) of the to-be-transmitted data.

In some examples, the first BSR sent by the UE may carry both the delay information (e.g., Remaining Delay Budget) of the to-be-transmitted data and the data amount information of the to-be-transmitted data.

The embodiments of the present disclosure provide a scheduling request transmission method, in which a UE sends an SR triggered by a BSR to a network device, where the BSR includes a first BSR triggered according to delay information of to-be-transmitted data. Since the first BSR is triggered according to the delay information of the to-be-transmitted data, the UE sending the SR triggered by the first BSR to the network device may meet the emergency scheduling requirement of service data, and is conducive to improving the user experience of the UE in XR and other applications.

In one embodiment, the BSR may further include:
a second BSR, where a triggering condition of the second BSR is different from a triggering condition of the first BSR.

Here, the second BSR may include at least one of: a Regular BSR, a Padding BSR, and a Periodic BSR.

Here, the second BSR may be a Regular BSR, which is a BRS triggered by a triggering condition different from that of the first BSR, for example, arrival of new data for a high-priority logical channel. In this example, both the first BSR and the second BSR may be considered Regular BSRs, with the difference being that they are triggered by different triggering conditions.

It may be understood that if the first BSR and the second BSR are triggered simultaneously, the first BSR and the second BSR may be triggered for different logical channels. In other words, when both the first BSR and the second BSR are triggered at the same time, the logical channel triggering the first BSR may be different from the logical channel triggering the second BSR.

In some examples, the logical channel triggering the second BSR and the logical channel triggering the first BSR may belong to different logical channels of the same logical channel group, or may belong to logical channels of different logical channel groups.

In one embodiment, the triggering condition of the first BSR includes at least one of:
the Remaining Delay Budget of the to-be-transmitted data being less than or equal to a first threshold;
a ratio of the Remaining Delay Budget of the to-be-transmitted data to the Packet Delay Budget being less than or equal to a second threshold.

Here, the first threshold and the second threshold may both be pre-configured by the network device, or agreed upon by protocol.

In this embodiment, the Remaining Delay Budget of the to-be-transmitted data is less than or equal to the first threshold, or the ratio of the Remaining Delay Budget to the Packet Delay Budget is less than or equal to the second threshold, which may both indicate that the to-be-transmitted data has been waiting in the buffer of the UE for a long time, i.e., the to-be-transmitted data has not been scheduled for a relatively long period. In this case, the first BSR may be triggered, and the SR triggered by the first BSR may be sent to the network device to obtain the uplink grant fed back by the network device, such that the to-be-transmitted data may be scheduled as soon as possible.

In this way, the emergency scheduling requirement of service may be met, especially for XR services, cloud gaming, or video-based services. In the case that the data packet has a smaller Packet Delay Budget, it may effectively reduce the occurrence of the to-be-transmitted data being discarded, thereby improving the user experience of the UE in XR and other applications.

In one embodiment, the triggering condition of the second BSR includes at least one of the following:
when the buffers of all logical channels belonging to a logical channel group are empty, to-be-transmitted data arrival on any one of the logical channels;
to-be-transmitted data arrival on a first logical channel, and a priority of the first logical channel being higher than a priority of a second logical channel having to-be-transmitted data.

In this embodiment, the second BSR may be a Regular BSR.

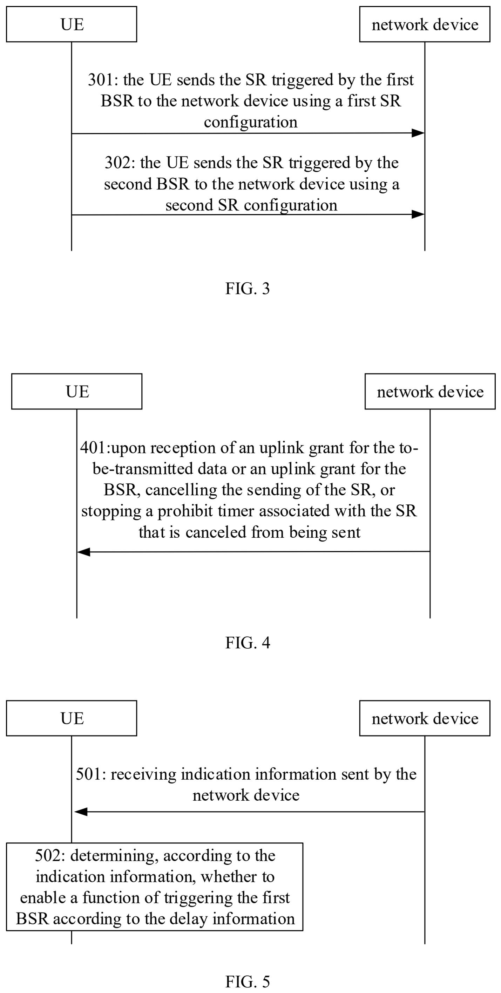

In one embodiment, as shown in FIG. 3, sending, by the UE, the SR triggered by the BSR to the network device may include at least one of the following steps:
301: the UE sends the SR triggered by the first BSR to the network device using a first SR configuration;
302: the UE sends the SR triggered by the second BSR to the network device using a second SR configuration.

In one embodiment, the first SR configuration is: any SR configuration of the UE; and/or the second SR configuration is: an SR configuration corresponding to the logical channel associated with the second BSR.

In some examples, the first SR configuration may be: an SR configuration corresponding to the triggering condition of the first BSR, or an SR configuration corresponding to a logical channel or logical channel group.

In some examples, in order to suppress conflicts arising from using the same PUCCH resource at the same moment for both the SR triggered by the first BSR and the SR triggered by the second BSR, the UE may use any SR configuration in the SR configurations of the UE except the second SR configuration to send the SR triggered by the first BSR.

That is, when a PUCCH resource indicated by a certain SR configuration of the UE is used by the UE for sending the SR triggered by the second BSR, the PUCCH resource indicated by this SR configuration does not be used for sending the SR triggered by the first BSR at the same moment.

Here, the network device may configure a plurality of second SR configurations for one UE. Based on the logical channel that triggers the second BSR, the UE may send the SR triggered by the second BSR to the network device based on the second SR configuration corresponding to the logical channel.

In this embodiment, the UE sends the SR triggered by the first BSR to the network device using the first SR configuration. The first SR configuration may be any SR configuration of the UE. That is, the UE may use any SR configuration of the UE to send the SR triggered by the first BSR to the network device. In this way, it may be ensured that the uplink transmission resource used by the UE to send the SR triggered by the first BSR, so as to promptly send the SR triggered by the first BSR, such that the network device may schedule the resource more timely, thereby further satisfying the emergency scheduling requirement of service data.

In one embodiment, when the SR configuration of the UE includes an SR configuration corresponding to the triggering condition of the first BSR, a usage priority of the SR configuration corresponding to the triggering condition of the first BSR is higher than that of the SR configuration corresponding to a logical channel or a logical channel group.

Here, the SR configuration corresponding to the triggering condition of the first BSR may be understood as a dedicated SR configuration for the first BSR, that is, an SR configuration configured by the network device for the UE specifically for sending the SR triggered by the first BSR, and this SR configuration cannot be used for sending the SR triggered by the second BSR.

In this embodiment, when the network device configures the SR configuration corresponding to the triggering condition of the first BSR for the UE, the UE may preferentially use the SR configuration corresponding to the triggering condition of the first BSR to send the SR triggered by the first BSR.

In one embodiment, as shown in FIG. 4, the method may further include the step:
401: upon reception of an uplink grant for the to-be-transmitted data or an uplink grant for the BSR, the sending of the SR is cancelled, or a prohibit timer associated with the SR that is canceled from being sent is stopped.

Here, the uplink grant for the to-be-transmitted data may be understood as that the uplink resource indicated by the uplink grant may be used for transmitting the to-be-transmitted data.

Here, the uplink grant for the BSR may be understood as that the uplink resource indicated by the uplink grant may be used for transmitting the BSR.

For example, the uplink grant for the first BSR may refer to that the uplink resource indicated by the uplink grant may be used for transmitting the first BSR.

In some examples, the to-be-transmitted data is first to-be-transmitted data, and when the delay information of the first to-be-transmitted data is used to trigger the first BSR, the uplink grant, indicating that the uplink resource may be used for transmitting the first to-be-transmitted data, may be sent by the network device to the UE based on the SR triggered by the second BSR.

In some examples, the to-be-transmitted data is second to-be-transmitted data, and when the logical channel to which the second to-be-transmitted data belongs is used to trigger the second BSR, the uplink grant indicating that the uplink resource may be used for transmitting the second to-be-transmitted data may be sent by the network device based on the SR triggered by the first BSR.

In some examples, the uplink grant indicating that uplink resource may be used for transmitting the second BSR may be sent by the network device based on the SR triggered by the first BSR.

In some examples, the uplink grant indicating that uplink resource may be used for transmitting the first BSR may be sent by the network device based on the SR triggered by the second BSR.

In some examples, the uplink grant indicating that uplink resource may be used for transmitting the second BSR may be sent by the network device based on the SR triggered by the first BSR.

In some examples, the above step 401 may include one of the following:
when the uplink grant received by the UE is an uplink grant for the to-be-transmitted data of the logical channel triggering the first BSR, the UE may cancel the sending of the SR triggered by the first BSR, or stop a prohibit timer associated with the SR triggered by the first BSR that is canceled from being sent;
when the uplink grant received by the UE is an uplink grant for the to-be-transmitted data of the logical channel triggering the second BSR, the UE may cancel the sending of the SR triggered by the second BSR, or stop a prohibit timer associated with the SR triggered by the second BSR that is canceled from being sent.
when the uplink grant received by the UE is an uplink grant for the first BSR, the UE may cancel the sending of the first BSR, or stop a prohibit timer associated with the SR triggered by the first BSR that is canceled from being sent;
when the uplink grant received by the UE is an uplink grant for the second BSR, the UE may cancel the sending of the second BSR, or stop a prohibit timer associated with the SR triggered by the second BSR that is canceled from being sent.

In some examples, regardless of whether the SR reporting is triggered by the first BSR or the second BSR, the SR is canceled and the associated SR prohibit timer is stopped in the following scenarios: when the received uplink grant may transmit the to-be-transmitted data, or when the received uplink grant may transmit the BSR MAC CE.

In the present disclosure, the prohibit timer associated with the SR refers to the SR-Prohibit Timer.

For example, taking the prohibit timer associated with the SR triggered by the first BSR as an example, when the UE sends an SR triggered by the first BSR once, it enables the prohibit timer associated with the SR, and only when the prohibit timer expires, the UE sends the SR triggered by the first BSR again. When the number of SRs triggered by the first BSR reaches the maximum number of transmissions, the UE initiates a random access procedure to request the uplink resource.

Exemplarily, the UE needs to transmit data over a Logical Channel A and a Logical Channel B, respectively. If there is first to-be-transmitted data arrival on the Logical Channel A, and a priority of Logical Channel A is higher than a priority of Logical Channel B which already has second to-be-transmitted data, the Logical Channel A triggers the second BSR. If there is no available uplink resource for the second BSR, the second BSR triggers an SR. For example, the UE sends an SR triggered by the second BSR to the network at a first moment.

At a second moment (later than the first moment), the delay information of the second to-be-transmitted data of the Logical Channel B triggers the first BSR, the UE may trigger an SR according to the first BSR, and thus the UE receives the uplink grant that is fed back based on the SR triggered by the second BSR from the network device.

If the uplink resources indicated by the uplink grant received by the UE at this time may be used to transmit the second to-be-transmitted data, the UE may cancel the sending of the SR triggered by the first BSR, or stop the prohibit timer associated with the SR triggered by the first BSR that is canceled from being sent.

If the uplink resources indicated by the uplink grant received by the UE at this time may be used to transmit the first BSR, the UE may cancel the sending of the SR triggered by the first BSR, or stop the prohibit timer associated with the SR triggered by the first BSR that is canceled from being sent.

] In one embodiment, as shown in FIG. 5, the method may further include the steps:
501: indication information sent by the network device is received;
502: it is determined, according to the indication information, whether to enable a function of triggering the first BSR according to the delay information.

In some examples, the indication information is configured for the UE to determine whether to enable the function of triggering the first BSR according to the delay information.

In some examples, the UE may receive a dedicated signaling, carrying the indication information, sent by the network device.

In some examples, the dedicated signaling may include: dedicated Downlink Control Information (DCI) and/or Radio Resource Control (RRC) signaling. It should be understood that the dedicated DCI and RRC signaling are merely exemplary, and this embodiment does not limit the specific form of the dedicated signaling.

In one embodiment, the indication information further includes: a resource granularity for enabling the function.

Here, the resource granularity for enabling the function may characterize a resource level used to trigger the first BSR.

In one embodiment, the resource granularity includes:
a logical channel;
a logical channel group.

In some examples, the indication information may indicate that the UE determines whether to enable the function of triggering the first BSR based on per-LCH. In this example, the indication information may be configured to indicate a part of or all of the logical channels used for triggering the first BSR.

In some examples, the indication information may indicate that the UE determines whether to enable the function of triggering the first BSR based on per-LCG. In this example, the indication information may be used to indicate part or all of the logical channel groups used for triggering the first BSR.

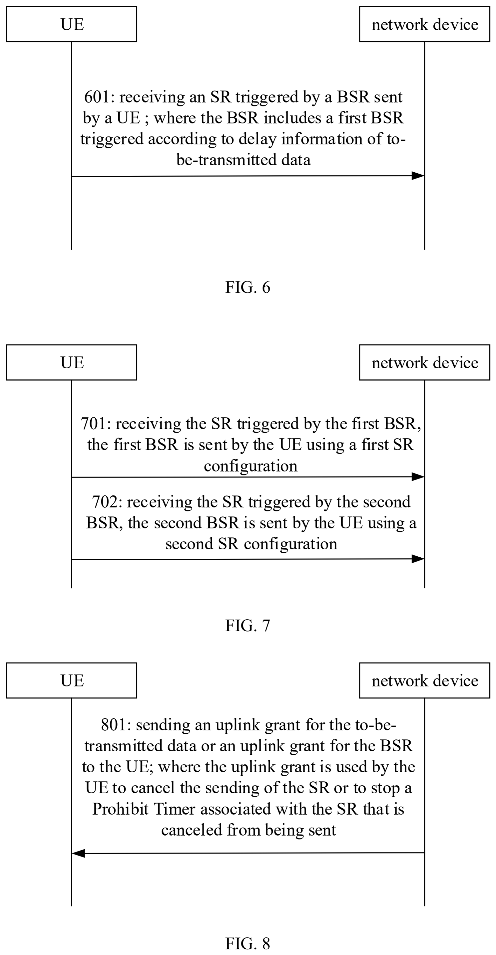

FIG. 6 is a schematic flowchart illustrating a scheduling request transmission method according to an exemplary embodiment. As shown in FIG. 2, the scheduling request transmission method is performed by a network device, and the method includes the following step:
601: an SR triggered by a BSR sent by a UE is received; where the BSR includes a first BSR triggered according to delay information of to-be-transmitted data.

In the present disclosure, the UE may include but is not limited to: a mobile phone, an unmanned aerial vehicle, a vehicle, a smart home appliance, or any Internet of Things (IoT) device. It should be understood that the UE in the present disclosure may also be referred to as a terminal or terminal device.

In some examples, the network device may be a functional entity which controls or schedules the UE, such as a base station, and the base station may be an LTE eNB, or an NR gNB, or an ng-eNB, or an en-gNB, etc.

The data may be transmitted between the UE and the network device (e.g., the base station), and the data may be in the form of data packets.

For example, in Extended Reality (XR) applications, the data packets may have an associated Packet Delay Budget (PDB), which may correspond to a maximum allowable waiting time associated with the data packet. The UE processes (e.g., transmits) the application data in the data packet within the packet delay budget.

In some examples, the to-be-transmitted data may be to-be-transmitted data of a logical channel belonging to a logical channel group.

In other examples, the to-be-transmitted data may include to-be-transmitted data of each logical channel belonging to a logical channel group.

The UE may, for a triggered BSR, trigger an SR in the case that there is no uplink grant for the BSR or no uplink resource for transmitting the BSR, to request uplink resources for transmitting the BSR from the network device.

In some examples, the delay information of the to-be-transmitted data may include Delay Budget Information (DBI).

In some examples, the delay information may include at least one of: Remaining Delay Budget (i.e., a delay budget margi) and Packet Delay Budget, and/or a ratio between the Remaining Delay Budget and the Packet Delay Budget.

In some examples, the UE may determine the Remaining Delay Budget of the to-be-transmitted data according to the Packet Delay Budget of the to-be-transmitted data and the waiting time of the to-be-transmitted data in a buffer of the UE.

As an example, the Remaining Delay Budget of the to-be-transmitted data may be an amount of remaining time between the Packet Delay Budget of the to-be-transmitted data and the waiting time of the to-be-transmitted data in the buffer of the UE.

In some examples, the UE may determine whether to trigger a logical channel corresponding to the first BSR according to the delay information of the to-be-transmitted data.

Exemplarily, the UE may, according to the indication information from the network device, determine a logical channel or logical channel group corresponding to the first BSR trigged according to the delay information of the to-be-transmitted data, and determine whether to trigger the first BSR according to a preset threshold and the delay information of the to-be-transmitted data in the determined logical channel or a logical channel within the logical channel group.

In the present disclosure, for to-be-transmitted data (e.g., a data packet) of a certain logical channel, if the first BSR is triggered according to the delay information belonging to the to-be-transmitted data, the to-be-transmitted data may be referred to as: to-be-transmitted data belonging to the logical channel that triggers the first BSR; and the logical channel may be referred to as: the logical channel that triggers the first BSR.

In some examples, the first BSR may be triggered by the UE according to a preset threshold and the delay information of the to-be-transmitted data of a certain logical channel.

As an example, the first BSR may be triggered by the UE when the Remaining Delay Budget of the to-be-transmitted data of a certain logical channel is less than or equal to a first threshold.

As another example, the first BSR may be triggered by the UE when a ratio of the Remaining Delay Budget of the to-be-transmitted data of a logical channel to a Packet Delay Budget is less than or equal to a second threshold.

In some other examples, the first BSR may be triggered by the UE according to a preset threshold and the delay information of the to-be-transmitted data of all logical channels belonging to the same logical channel group.

As an example, the first BSR may be triggered by the UE when an average value of the Remaining Delay Budgets of the to-be-transmitted data of all logical channels within the same logical channel group is less than or equal to a preset first average threshold.

As another example, the first BSR may be triggered by the UE when an average value of the ratios of the Remaining Delay Budget to the Packet Delay Budget of the to-be-transmitted data of all logical channels within the same logical channel group is less than or equal to a preset second average threshold.

In some examples, in the above step 601, the SR triggered by the first BSR may be sent by the UE using a first SR configuration.

Here, Physical Uplink Control Channel (PUCCH) resource indicated by the first SR configuration is used by the UE to send the SR triggered by the first BSR.

In some examples, the first SR configuration may be any SR configuration pre-configured for the UE by the network device.

Exemplarily, the first SR configuration may be an SR configuration corresponding to the triggering condition of the first BSR, or an SR configuration corresponding to a logical channel or a logical channel group.

For example, the SR configuration may be configured by the network device for a logical channel, and different logical channels belonging to one logical channel group correspond to different SR configurations.

As another example, the SR configuration may be configured by the network device for a logical channel group, and different logical channel groups correspond to different SR configurations.

In some examples, the method may further include:
sending an uplink grant to the UE, where the uplink grant indicates that the uplink resource is able to be used for the UE to transmit the first BSR.

Exemplarily, the uplink grant for the first BSR may indicate or carry resource allocation information for reporting the first BSR by the UE, and the UE may report the first BSR to the network device according to the resource allocation information.

In some examples, the first BSR sent by the UE to the network device may include: data amount information related to delay information (e.g., Remaining Delay Budget) of the to-be-transmitted data used for triggering the first BSR.

In some examples, the first BSR sent by the UE may carry the delay information (e.g., Remaining Delay Budget) of the to-be-transmitted data.

In some examples, the first BSR sent by the UE may carry both the delay information (e.g., Remaining Delay Budget) of the to-be-transmitted data and the data amount information of the to-be-transmitted data.

The embodiments of the present disclosure provide a scheduling request transmission method, where the network device receives an SR triggered by a BSR that is sent by the UE, and the BSR includes a first BSR triggered according to the delay information of to-be-transmitted data. Since the first BSR is triggered according to the delay information of the to-be-transmitted data, the network device receiving the SR triggered by the first BSR sent by the UE may meet the urgent scheduling requirement of service data, which is conducive to improving the user experience of the UE in XR and other applications.

In one embodiment, the BSR further includes:
a second BSR, where a triggering condition of the second BSR is different from a triggering condition of the first BSR.

Here, the second BSR may include at least one of: a Regular BSR, a Padding BSR, and a Periodic BSR.

Here, the second BSR may be a Regular BSR, which is a BRS triggered by a triggering condition different from that of the first BSR, for example, arrival of new data for a high-priority logical channel. In this example, both the first BSR and the second BSR may be considered Regular BSRs, with the difference being that they are triggered by different triggering conditions.

It may be understood that if the first BSR and the second BSR are triggered simultaneously, the first BSR and the second BSR may be triggered for different logical channels. In other words, when both the first BSR and the second BSR are triggered at the same time, the logical channel triggering the first BSR may be different from the logical channel triggering the second BSR.

In some examples, the logical channel triggering the second BSR and the logical channel triggering the first BSR may belong to different logical channels of the same logical channel group, or may belong to logical channels of different logical channel groups.

In one embodiment, the triggering condition of the first BSR includes at least one of:
the Remaining Delay Budget of the to-be-transmitted data being less than or equal to a first threshold;
a ratio of the Remaining Delay Budget of the to-be-transmitted data to the Packet Delay Budget being less than or equal to a second threshold.

Here, the first threshold and the second threshold may both be pre-configured by the network device, or agreed upon by protocol.

In this embodiment, the Remaining Delay Budget of the to-be-transmitted data is less than or equal to the first threshold, or the ratio of the Remaining Delay Budget to the Packet Delay Budget is less than or equal to the second threshold, which may both indicate that the to-be-transmitted data has been waiting in the buffer of the UE for a long time, i.e., the to-be-transmitted data has not been scheduled for a relatively long period. In this case, the UE may trigger the first BSR, and then send the SR triggered by the first BSR to the network device. The network device may send an uplink grant to the UE according to the SR triggered by the first BSR, such that the to-be-transmitted data by the UE may be scheduled as soon as possible.

In this way, the emergency scheduling requirement of service may be met, especially for XR services, cloud gaming, or video-based services. In the case that the data packet has a smaller Packet Delay Budget, it may effectively reduce the occurrence of the to-be-transmitted data being discarded, thereby improving the user experience of the UE in XR and other applications.

In one embodiment, the triggering condition of the second BSR includes at least one of the following:
when the buffers of all logical channels belonging to a logical channel group are empty, to-be-transmitted data arrival on any one of the logical channels;
to-be-transmitted data arrival on a first logical channel, and a priority of the first logical channel being higher than a priority of a second logical channel having to-be-transmitted data.

In this embodiment, the second BSR may be a Regular BSR.

In one embodiment, as shown in FIG. 7, receiving the SR triggered by the BSR sent by the UE may include at least one of the following steps:
701: the SR triggered by the first BSR is received, the first BSR is sent by the UE using a first SR configuration;
   and/or,
702: the SR triggered by the second BSR is received, the second BSR is sent by the UE using a second SR configuration.

In one embodiment, the first SR configuration is: any SR configuration of the UE; and/or the second SR configuration is: an SR configuration corresponding to the logical channel associated with the second BSR.

In some examples, the first SR configuration may be: an SR configuration corresponding to the triggering condition of the first BSR, or an SR configuration corresponding to a logical channel or logical channel group.

In some examples, in order to suppress conflicts arising from using the same PUCCH resource at the same moment for both the SR triggered by the first BSR and the SR triggered by the second BSR, the UE may use any SR configuration in the SR configurations of the UE except the second SR configuration to send the SR triggered by the first BSR.

That is, when a PUCCH resource indicated by a certain SR configuration of the UE is used by the UE for sending the SR triggered by the second BSR, the PUCCH resource indicated by this SR configuration does not be used for sending the SR triggered by the first BSR at the same moment.

Here, the network device may configure a plurality of second SR configurations for one UE. Based on the logical channel that triggers the second BSR, the UE may send the SR triggered by the second BSR to the network device based on the second SR configuration corresponding to the logical channel.

In this embodiment, the network device receives the SR triggered by the first BSR sent by the UE using the first SR configuration. The first SR configuration may be any SR configuration of the UE. That is, the UE may use any SR configuration of the UE to send the SR triggered by the first BSR to the network device. In this way, it may be ensured that the uplink transmission resource used by the UE to send the SR triggered by the first BSR, so as to promptly send the SR triggered by the first BSR, such that the network device may schedule the resource more timely, thereby further satisfying the emergency scheduling requirement of service data.

In one embodiment, the first SR configuration is: any SR configuration of the UE;
and/or,
the second SR configuration is: the SR configuration corresponding to the logical channel associated with the second BSR.

Here, the SR configuration corresponding to the triggering condition of the first BSR may be understood as a dedicated SR configuration for the first BSR, that is, an SR configuration configured by the network device for the UE specifically for sending the SR triggered by the first BSR, and this SR configuration cannot be used for sending the SR triggered by the second BSR.

In this embodiment, when the network device configures the SR configuration corresponding to the triggering condition of the first BSR for the UE, the UE may preferentially use the SR configuration corresponding to the triggering condition of the first BSR to send the SR triggered by the first BSR.

In one embodiment, when the SR configuration of the UE includes an SR configuration corresponding to the triggering condition of the first BSR, a usage priority of the SR configuration corresponding to the triggering condition of the first BSR is higher than that of the SR configuration corresponding to a logical channel or a logical channel group.

In one embodiment, as shown in FIG. 8, the method may further include the following step:
801: an uplink grant for the to-be-transmitted data or an uplink grant for the BSR is sent to the UE; where the uplink grant is used by the UE to cancel the sending of the SR or to stop a Prohibit Timer associated with the SR that is canceled from being sent.

Here, the uplink grant for the to-be-transmitted data may be understood as that the uplink resource indicated by the uplink grant may be used for transmitting the to-be-transmitted data.

Here, the uplink grant for the BSR may be understood as that the uplink resource indicated by the uplink grant may be used for transmitting the BSR.

For example, the uplink grant for the first BSR may refer to that the uplink resource indicated by the uplink grant may be used for transmitting the first BSR.

In some examples, the to-be-transmitted data is first to-be-transmitted data, and when the delay information of the first to-be-transmitted data is used to trigger the first BSR, the uplink grant, indicating that the uplink resource may be used for transmitting the first to-be-transmitted data, may be sent by the network device to the UE based on the SR triggered by the second BSR.

In some examples, the to-be-transmitted data is second to-be-transmitted data, and when the logical channel to which the second to-be-transmitted data belongs is used to trigger the second BSR, the uplink grant indicating that the uplink resource may be used for transmitting the second to-be-transmitted data may be sent by the network device based on the SR triggered by the first BSR.

In some examples, the uplink grant indicating that uplink resource may be used for transmitting the second BSR may be sent by the network device based on the SR triggered by the first BSR.

In some examples, the uplink grant indicating that uplink resource may be used for transmitting the first BSR may be sent by the network device based on the SR triggered by the second BSR.

In some examples, the uplink grant indicating that uplink resource may be used for transmitting the second BSR may be sent by the network device based on the SR triggered by the first BSR.

In some examples, regardless of whether the SR reporting is triggered by the first BSR or the second BSR, the SR is canceled and the associated SR prohibit timer is stopped in the following scenarios: when the received uplink grant may transmit the to-be-transmitted data, or when the received uplink grant may transmit the BSR MAC CE.

In the present disclosure, the prohibit timer associated with the SR refers to the SR-Prohibit Timer.

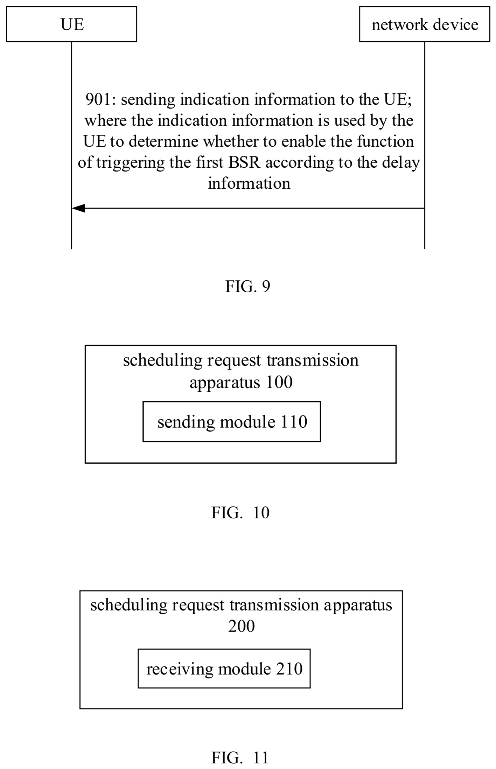

In one embodiment, as shown in FIG. 9, the method may further include the step:
901: indication information is sent to the UE; where the indication information is used by the UE to determine whether to enable the function of triggering the first BSR according to the delay information.

In some examples, the indication information is configured for the UE to determine whether to enable the function of triggering the first BSR according to the delay information.

In some examples, the UE may receive a dedicated signaling, carrying the indication information, sent by the network device.

In some examples, the dedicated signaling may include: dedicated Downlink Control Information (DCI) and/or Radio Resource Control (RRC) signaling. It should be understood that the dedicated DCI and RRC signaling are merely exemplary, and this embodiment does not limit the specific form of the dedicated signaling.

In one embodiment, the indication information further includes: a resource granularity for enabling the function.

Here, the resource granularity for enabling the function may characterize a resource level used to trigger the first BSR.

In one embodiment, the resource granularity includes:
a logical channel;
a logical channel group.

In some examples, the indication information may indicate that the UE determines whether to enable the function of triggering the first BSR based on per-LCH. In this example, the indication information may be configured to indicate a part of or all of the logical channels used for triggering the first BSR.

In some examples, the indication information may indicate that the UE determines whether to enable the function of triggering the first BSR based on per-LCG. In this example, the indication information may be used to indicate part or all of the logical channel groups used for triggering the first BSR.

To further illustrate any embodiment of the present disclosure, several specific examples are provided below.

In the present disclosure, the first BSR may be referred to as a second-type BSR, which is associated with the delay information of the to-be-transmitted data. The second BSR may be referred to as a first-type BSR, which is capable of indicating data amount information of to-be-transmitted data but incapable of indicating the delay information of the to-be-transmitted data.

Embodiments of the present disclosure provide a scheduling request transmission method, which may include the following steps:
The terminal sends an SR according to the delay budget of the to-be-transmitted data.

In one embodiment, when the terminal reports a BSR, if the triggering condition of the currently triggered BSR is the second BSR, a first-type SR configuration is used to send a Scheduling Request (SR) to the base station; if the triggering condition of the currently triggered BSR is the first BSR, a second-type SR configuration is used to send the Scheduling Request (SR) to the base station.

As an example, the triggering condition of the second BSR is a triggering condition of the BSR other than the triggering condition of the first BSR, such as the arrival of new data or the arrival of a logical channel with a higher priority.

As an example, the triggering condition of the first BSR is that the remaining delay budget of the to-be-transmitted data is less than or equal to a threshold.

As an example, the first-type SR configuration may be the SR configuration corresponding to the logical channel that triggers the BSR, configured by the network device.

As an example, the second-type SR configuration may be any SR configuration configured by the network device.

As an example, the second-type SR configuration may be an SR configuration configured by the network device specifically for the SR triggered by the first BSR.

As an example, the second-type SR configuration may be any SR configuration configured by the network device, and the SR configuration may include: an SR configuration that is specifically configured, by the network device, for the SR triggered by the first BSR.

If the SR configuration of the UE includes the SR configuration that is specifically configured by the network device for the SR triggered by the first BSR, this SR configuration shall be preferentially used; otherwise, any SR configuration corresponding to a logical channel or logical channel group configured by the network is used.

In one embodiment, regardless of whether the SR reporting is triggered by the first BSR or the second BSR, the SR is canceled and the associated SR prohibit timer is stopped under the following scenarios:
as an example, when the received uplink grant may be used to transmit the to-be-transmitted data.
as an example, when the received uplink grant may be used to transmit the BSR MAC CE.

In one embodiment, the network device (e.g., base station) may inform the terminal via the dedicated signaling to use the feature that is enabled (i.e., to trigger the BSR according to the delay information of the to-be-transmitted data, such as the remaining delay budget).

As an example, when the enabling of the feature is per logical channel, the base station may enable the mechanism for a certain logical channel when reporting the BSR.

As an example, when the enabling of the feature is per logical channel group, the base station may enable the mechanism for a certain logical channel group when reporting the BSR.

In one embodiment, any SR configuration may be used for an SR triggered by a BSR that is triggered by the remaining delay budget being less than or equal to the threshold.

FIG. 10 is a schematic structural diagram of a scheduling request transmission apparatus according to an exemplary embodiment. The scheduling request transmission apparatus is applied to a UE. As shown in FIG. 10, the scheduling request transmission apparatus 100 may include:
a sending module 110, configured to send, by the UE, an SR triggered by a BSR to a network device; where the BSR includes a first BSR triggered according to delay information of to-be-transmitted data.

In one embodiment, the BSR may further include:
a second BSR, where a triggering condition of the second BSR is different from that of the first BSR.

In one embodiment, the triggering condition of the first BSR includes at least one of:
a remaining delay budget of the to-be-transmitted data being less than or equal to a first threshold;
a ratio of a remaining delay budget of the to-be-transmitted data to a packet delay budget being less than or equal to a second threshold.

In one embodiment, the triggering condition of the second BSR includes at least one of:
when buffers of all logical channels belonging to a logical channel group are empty, to-be-transmitted data arrival on any one of the logical channels; or
to-be-transmitted data arrival on a first logical channel, and a priority of the first logical channel being higher than a priority of a second logical channel having to-be-transmitted data.

In one embodiment, the UE sending the SR triggered by the BSR to the network device includes:
sending, by the UE, an SR triggered by the first BSR to the network device using a first SR configuration;
   and/or,
sending, by the UE, an SR triggered by the second BSR to the network device using a second SR configuration.

In one embodiment, the first SR configuration is: any SR configuration of the UE;
and/or,
the second SR configuration is: an SR configuration corresponding to a logical channel associated with the second BSR.

In one embodiment, when the SR configuration of the UE includes an SR configuration corresponding to the triggering condition of the first BSR, a usage priority of the SR configuration corresponding to the triggering condition of the first BSR is higher than a usage priority of an SR configuration corresponding to a logical channel or a logical channel group.

In one embodiment, the apparatus further includes:
a cancellation module, configured to cancel the sending of the SR or stop a prohibit timer associated with the SR that is canceled from being sent when an uplink grant for the to-be-transmitted data or an uplink grant for the BSR is received.

In one embodiment, the apparatus further includes:
a receiving module, configured to receive indication information sent by the network device;
a determining module, configured to determine, according to the indication information, whether to enable a function of triggering the first BSR based on the delay information.

In one embodiment, the indication information further includes: the resource granularity for enabling the function.

In one embodiment, the resource granularity includes:
a logical channel;
a logical channel group.

Regarding the above apparatus embodiments, the specific manners in which each module performs the operations are described in detail in the relevant method embodiments and will not be elaborated again here.

FIG. 11 is a schematic structural diagram of a scheduling request transmission apparatus according to an exemplary embodiment. The scheduling request transmission apparatus is applied to a network device. As shown in FIG. 11, the scheduling request transmission apparatus 200 may include:
a receiving module 210, configured to receive an SR triggered by a BSR, where the BSR is sent by a UE, and the BSR includes a first BSR triggered according to delay information of to-be-transmitted data.

In one embodiment, the BSR further includes:
a second BSR, where a triggering condition of the second BSR is different from that of the first BSR.

In one embodiment, the triggering condition of the first BSR includes at least one of the following:
a remaining delay budget of the to-be-transmitted data being less than or equal to a first threshold;
a ratio of a remaining delay budget of the to-be-transmitted data to a packet delay budget being less than or equal to a second threshold.

In one embodiment, the triggering condition of the second BSR includes at least one of the following:
when buffers of all logical channels belonging to a logical channel group are empty, to-be-transmitted data arrival on any one of the logical channels; or
to-be-transmitted data arrival on the first logical channel, and a priority of the first logical channel being higher than a priority of the second logical channel having to-be-transmitted data.

In one embodiment, the receiving module 210 is configured to:
receive an SR triggered by the first BSR, where the first BSR is sent by the UE using a first SR configuration;
   and/or,
receive an SR triggered by the second BSR, where the second BSR is sent by the UE using a second SR configuration.

In one embodiment, the first SR configuration is: any SR configuration of the UE;
and/or,
the second SR configuration is: an SR configuration corresponding to a logical channel associated with the second BSR.

In one embodiment, when the SR configuration of the UE includes an SR configuration corresponding to the triggering condition of the first BSR, a usage priority of the SR configuration corresponding to the triggering condition of the first BSR is higher than that of an SR configuration corresponding to a logical channel or a logical channel group.

In one embodiment, the apparatus further includes:
a first sending module, configured to send an uplink grant for the to-be-transmitted data or an uplink grant for the BSR to the UE; where the uplink grant is used by the UE to cancel the sending of the SR or to stop a prohibit timer associated with the SR that is canceled from being sent.

In one embodiment, the apparatus further includes:
a second sending module, configured to send indication information to the UE; where the indication information is used by the UE to determine whether to enable a function of triggering the first BSR according to the delay information.

In one embodiment, the indication information further includes: the resource granularity for enabling the function.

In one embodiment, the resource granularity includes:
a logical channel;
a logical channel group.

Regarding the above apparatus embodiments, the specific manners in which each module performs the operations are described in detail in the relevant method embodiments and will not be elaborated again here.

An embodiment of the present disclosure provides a communication system, the communication system includes:
a UE, configured to send an SR triggered by a BSR to a network device; where the BSR includes a first BSR triggered according to delay information of to-be-transmitted data;
a network device, configured to receive the SR triggered by the BSR sent by the UE; where the BSR includes a first BSR triggered according to delay information of to-be-transmitted data.

In one embodiment, the BSR further includes:
a second BSR, where a triggering condition of the second BSR is different from that of the first BSR.

In one embodiment, the triggering condition of the first BSR includes at least one of the following:
a remaining delay budget of the to-be-transmitted data being less than or equal to a first threshold; or
a ratio of a remaining delay budget of the to-be-transmitted data to a packet delay budget of the to-be-transmitted data being less than or equal to a second threshold.

In one embodiment, the triggering condition of the second BSR includes at least one of the following:
when buffers of all logical channels belonging to a logical channel group are empty, to-be-transmitted data arrival on any one of the logical channels; or
to-be-transmitted data arrival on the first logical channel, and a priority of the first logical channel being higher than a priority of the second logical channel having to-be-transmitted data.

In one embodiment, the UE is configured to:
send an SR triggered by the first BSR to the network device using a first SR configuration;
   and/or,
send an SR triggered by the second BSR to the network device using a second SR configuration.

In one embodiment, the network device is configured to:
receive an SR triggered by the first BSR sent by the UE using the first SR configuration;
   and/or,
receive an SR triggered by the second BSR sent by the UE using the second SR configuration.

In one embodiment, the first SR configuration is: any SR configuration of the UE;
and/or,
the second SR configuration is: the SR configuration corresponding to a logical channel associated with the second BSR.

In one embodiment, when the SR configuration of the UE includes an SR configuration corresponding to the triggering condition of the first BSR, a usage priority of the SR configuration corresponding to the triggering condition of the first BSR is higher than a usage priority of the SR configuration corresponding to a logical channel or logical channel group.

In one embodiment, the UE is further configured to:
cancel the sending of the SR, or stop a prohibit timer associated with the SR that is canceled from being transmitted, when an uplink grant for the to-be-transmitted data or an uplink grant for the BSR is received.

In one embodiment, the UE is further configured to:
receive indication information sent by the network device;
determine, according to the indication information, whether to enable a function of triggering the first BSR according to the delay information.

In one embodiment, the network device is further configured to:
send an uplink grant for the to-be-transmitted data or for the BSR to the UE; where the uplink grant is used by the UE to cancel the sending of the SR, or stop a prohibit timer associated with the SR that is canceled from being sent.

In one embodiment, the network device is further configured to:
send indication information to the UE; where the indication information is used by the UE to determine whether to enable a function of triggering the first BSR according to the delay information.

In one embodiment, the indication information further includes: the resource granularity for enabling the function.

In one embodiment, the resource granularity includes:
a logical channel;
a logical channel group.

Embodiments of the present disclosure provide a communication device, including: a processor, a memory, and an executable program stored in the memory and executable by the processor, where the processor executes the executable program to perform the scheduling request transmission method as applied to the UE or the network device.

The processor may include various types of storage medium, the storage medium being non-transitory computer storage medium, which may continue to retain information stored thereon after the communication device loses power.

Here, the communication device includes: a UE or a network device.

The processor may be connected to the memory via a bus or the like, and is used to read the executable program stored in the memory, for example, at least one of the scheduling request transmission methods as shown in FIGS. 2 to 9.

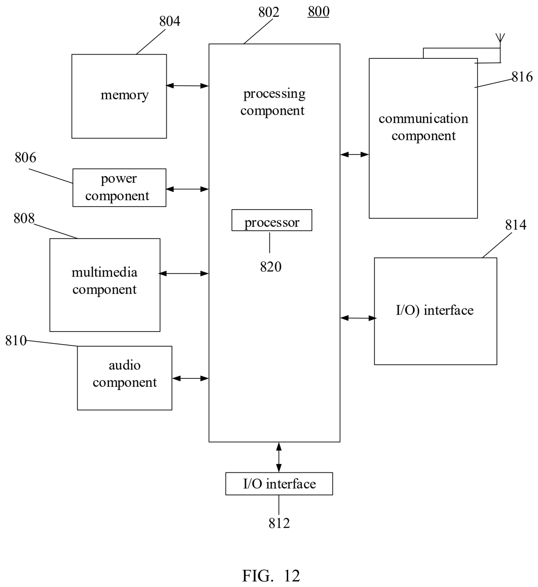

FIG. 12 is a block diagram of a UE 800 according to some embodiments. For example, the UE 800 may be a drone, a mobile phone, a computer, a digital broadcasting terminal, a message transceiver device, a game console, a tablet device and a personal digital assistant.

As illustrated in FIG. 12, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the above described method. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In some embodiments, the communication component 816 receives a broadcast signal or broadcast associated information from an external broadcast management system via a broadcast channel. In some embodiments, the communication component 816 further includes a near field communication (NFC) module to facilitate short-range communication. For example, the NFC module may be implemented based on a radio frequency identity (RFID) technology, an infrared data association (IrDA) technology, an ultra-wideband (UWB) technology, a Bluetooth (BT) technology, and other technologies.

In some embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described scheduling request transmission method.

In some embodiments, there is also provided a non-transitory computer readable storage medium including instructions, such as included in the memory 804, executable by the processor 820 in the UE 800, for performing the above scheduling request transmission method. For example, non-transitory computer-readable storage medium may be a ROM, a RAM, a CD-ROM, a magnetic tape, a floppy disc, an optical data storage device, and the like.

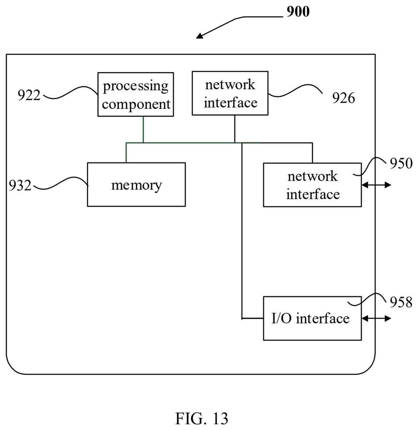

As illustrated in FIG. 13, embodiments of the disclosure show a structure of a communication device. For example, the communication device 900 may be provided as a network-side device. The communication device may be a base station.

As illustrated in FIG. 13, the communication device 900 includes a processing component 922, which includes one or more processors, and a memory resource represented by a memory 932 for storing instructions executable by the processing component 922, such as application programs. The application program stored in the memory 932 may include one or more modules, each module corresponds to a set of instructions. Furthermore, the processing component 922 is configured to execute the instructions to perform the scheduling request transmission method applied on the network device side as described above.

The communication device 900 may also include a power component 926 configured to perform power management of the communication device 900, a wired or wireless network interface 950 configured to connect the communication device 900 to the network, and an input/output (I/O) interface 958. The communication device 900 may operate based on an operating system stored on the memory 932, such as Windows Server^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A scheduling request transmission method, performed by a user equipment UE, comprising:
sending, by the UE, a scheduling request SR triggered by a buffer status report BSR to a network device; wherein the BSR comprises: a first BSR triggered according to delay information of to-be-transmitted data.

2. The method according to claim 1, wherein the BSR further comprises:
a second BSR, wherein a triggering condition of the second BSR is different from a triggering condition of the first BSR.

3. The method according to claim 2, wherein the triggering condition of the first BSR comprises at least one of:
a remaining delay budget of the to-be-transmitted data being less than or equal to a first threshold; or
a ratio of a remaining delay budget of the to-be-transmitted data to a packet delay budget of the to-be-transmitted data being less than or equal to a second threshold.

4. The method according to claim 2 or 3, wherein the triggering condition of the second BSR comprises at least one of:
when buffers of all logical channels belonging to a logical channel group are empty, the to-be-transmitted data arrival on any one of the logical channels; or
the to-be-transmitted data arrival on a first logical channel, and a priority of the first logical channel being higher than a priority of a second logical channel having the to-be-transmitted data.

5. The method according to any one of claims 2 to 4, wherein sending, by the UE, the scheduling request SR triggered by the buffer status report BSR to the network device, comprises :
sending, by the UE, an SR triggered by the first BSR to the network device using a first SR configuration; and/or,
sending, by the UE, an SR triggered by the second BSR to the network device using a second SR configuration.

6. The method according to claim 5, wherein the first SR configuration is any SR configuration of the UE; and/or
the second SR configuration is: an SR configuration corresponding to a logical channel associated with the second BSR.

7. The method according to claim 6, wherein when the SR configuration of the UE comprises an SR configuration corresponding to the triggering condition of the first BSR, a usage priority of the SR configuration corresponding to the triggering condition of the first BSR is higher than a usage priority of an SR configuration corresponding to a logical channel or a logical channel group.

8. The method according to any one of claims 1 to 7, further comprising:
upon reception of an uplink grant for the to-be-transmitted data or an uplink grant for the BSR, canceling the sending of the SR, or stopping a prohibit timer associated with the SR that is canceled from being sent.

9. The method according to any one of claims 1 to 8, further comprising:
receiving indication information sent by the network device; and
determining, according to the indication information, whether to enable a function of triggering the first BSR according to the delay information.

10. The method according to claim 9, wherein the indication information further comprises: a resource granularity for enabling the function.

11. The method according to claim 10, wherein the resource granularity comprises:
a logical channel;
a logical channel group.

12. A scheduling request transmission method, performed by a network device, comprising:
receiving, by the network device, a scheduling request SR triggered by a buffer status report BSR sent by a user equipment UE, wherein the BSR comprises a first BSR triggered according to delay information of to-be-transmitted data.

13. The method according to claim 12, wherein the BSR further comprises:
a second BSR, wherein a triggering condition of the second BSR is different from a triggering condition of the first BSR.

14. The method according to claim 13, wherein the triggering condition of the first BSR comprises at least one of:
a remaining delay budget of the to-be-transmitted data being less than or equal to a first threshold; or
a ratio of a remaining delay budget of the to-be-transmitted data to a packet delay budget of the to-be-transmitted data being less than or equal to a second threshold.

15. The method according to claim 13 or 14, wherein the triggering condition of the second BSR comprises at least one of:
when buffers of all logical channels belonging to a logical channel group are empty, the to-be-transmitted data arrival on any one of the logical channels; or
the to-be-transmitted data arrival on a first logical channel, and a priority of the first logical channel being higher than a priority of a second logical channel having the to-be-transmitted data.

16. The method according to any one of claims 13 to 15, wherein receiving the scheduling request SR triggered by the buffer status report BSR sent by the user equipment UE comprises:
receiving an SR triggered by the first BSR, wherein the first BSR is sent by the UE using a first SR configuration; and/or
receiving an SR triggered by the second BSR, wherein the second BSR is sent by the UE using a second SR configuration.

17. The method according to claim 16, wherein the first SR configuration is any SR configuration of the UE; and/or
the second SR configuration is: an SR configuration corresponding to a logical channel associated with the second BSR.

18. The method according to claim 17, wherein when the SR configuration of the UE comprises an SR configuration corresponding to the triggering condition of the first BSR, a usage priority of the SR configuration corresponding to the triggering condition of the first BSR is higher than a usage priority of an SR configuration corresponding to a logical channel or a logical channel group.

19. The method according to any one of claims 12 to 18, further comprising:
sending an uplink grant for the to-be-transmitted data or an uplink grant for the BSR to the UE; wherein the uplink grant is used by the UE to cancel the sending of the SR, or to stop a prohibit timer associated with the SR that is canceled from being sent.

20. The method according to any one of claims 12 to 19, further comprising:
sending indication information to the UE; wherein the indication information is used by the UE to determine whether to enable a function of triggering the first BSR according to the delay information.

21. The method according to claim 20, wherein the indication information further comprises: a resource granularity for enabling the function.

22. The method according to claim 21, wherein the resource granularity comprises:
a logical channel;
a logical channel group.

23. A scheduling request transmission apparatus, applied to a user equipment UE, comprising:
a sending module, configured to send, by the UE, a scheduling request SR triggered by a buffer status report BSR to a network device, wherein the BSR comprises a first BSR triggered according to delay information of to-be-transmitted data.

24. A scheduling request transmission apparatus, applied to a network device, comprising:
a receiving module, configured to receive a scheduling request SR triggered by a buffer status report BSR sent by a user equipment UE, wherein the BSR comprises a first BSR triggered according to delay information of to-be-transmitted data.

25. A communication system, comprising:
a user equipment UE, configured to perform the scheduling request transmission method according to any one of claims 1 to 11; and
a network device, configured to perform the scheduling request transmission method according to any one of claims 12 to 22.

26. A communication device, comprising a processor, a memory, and an executable program stored in the memory and executable by the processor, wherein the processor executes the executable program to perform the scheduling request transmission method according to any one of claims 1 to 11 or any one of claims 12 to 22.

27. A computer-readable storage medium, storing an executable program, wherein the executable program, when executed by a processor, is configured to implement the scheduling request transmission method according to any one of claims 1 to 11 or any one of claims 12 to 22.
